# EUROPEAN PATENT APPLICATION

(11) **EP 2 113 418 A1**
(43) Date of publication of application: **04.11.2009**
(21) Application number: 08425306.1
(22) Date of filing: 30.04.2008
(51) Int. Cl.: B60Q 1/10

(54) **System and method for the automatic adjustment of the optical axis of vehicle headlights**

(71) Applicant: Iveco S.p.A., 10156 Torino (IT)
(72) Inventor: Bertozzi, Franco, 10040 Druento (IT)
(74) Representative: Borsano, Corrado

(57) **Abstract**

This invention relates to a system and a method for the automatic adjustment of the position of vehicle headlights.

The aim of this invention is to provide a system able to automatically adjust the headlight orientation when the longitudinal orientation of the vehicle varies because of its load. The system according to this invention is **characterized in that** it is completely automated both in determining the longitudinal trim of the vehicle and in determining how to correct the headlight orientation according to the vehicle trim.

## Description

This invention relates to a system and a method for the automatic adjustment of the orientation of vehicle headlights.

As is known the light beam produced by the headlights has to meet certain parameters, fixed by the traffic code, which therefore may vary from State to State but which always have to be respected for obvious safety reasons.

For example, the light beam has to be oriented so that it can light a wall or an obstacle, placed at a certain distance from the headlights themselves, at a certain height. These parameters have to be respected, for this reason a variation of the vehicle trim causing a failure in the fulfilment of these parameters has necessarily to be corrected by means of the adjustment of the headlight orientation.

As is known, in the vehicles equipped with mechanical suspension, or anyway with non-adjustable suspension, the vehicle trim varies according to the load. In particular, in case of industrial vehicles whose function is to contain and to transport considerable loads, the payload weight is concentrated in the rear part of the vehicle or of the trailer and, unless the vehicle is equipped with self-levelling pneumatic suspensions, the additional payload modifies the vehicle trim, and generally provokes the compression of the rear suspension of the vehicle, that is a lowering of the rear part of the vehicle.

Therefore the loading of the goods on a vehicle provokes a consequent and unintentional raising of the light beam, which may potentially cause a dangerous dazzle to the other vehicles.

If, as said before, the vehicle is not equipped with pneumatic suspension but, on the contrary, is equipped with mechanical suspensions which do not allow the adjustment of the trim, as in the front axle suspensions of the trailer tractors, but not only them, the added payload and the consequent lowering of the rear part of the vehicle imply a variation of the vehicle trim which is no longer neutral, that is substantially parallel to the ground.

As a consequence of the variation of the vehicle trim, it is known that the alignment of the headlights, placed in the front part of the vehicle itself, no longer correspond to the best alignment in which they are adjusted, with the vehicle in its neutral position.

Therefore, both on cars and on industrial vehicles, a manual control is known in the prior art allowing the driver to modify the orientation of the headlight, that is to modify their orientation with respect to the ground horizontal plane, according to the variation of the vehicle trim due to the load condition.

The systems for the headlight orientation adjustment of the type known in the art, however, present a number of drawbacks.

A first drawback is due to the fact that the systems of the type known are manual, that is they need the driver to use a provided adjusting lever or knob in order to modify the headlight orientation.

The manual adjustment causes two main problems. Firstly, the driver has to become aware that the original headlight orientation is no longer efficient, due to the variation of the vehicle trim. The simple observation from inside the cabin does not necessarily give the driver a clear view of the fact that the headlights no longer have their best orientation.

Secondly, even if the driver became aware of the actual poor lighting by the headlights and intended to modify their orientation by the appropriate control, he/she would proceed by trial and error, using the adjusting knob until he/she would notice that the new headlight orientation provides again a satisfying lighting.

Also in this case, the driver's perception is not necessarily correct, therefore the simple observation of the light beam from inside the cabin is not necessarily enough for the driver to correct the headlight orientation and to find their best orientation suitable for the new loading conditions.

To sum up, the manual systems not only require the driver's intervention, who may not become aware that the headlight light beam is no longer correctly oriented, but they also leave the driver the discretionary power to decide what is its best orientation.

A further drawback of the manual systems of the type known is that usually the adjustment of the headlights may be carried out according to a limited number of predetermined positions that the driver may choice at his/her discretion by means of a snap switch.

In particular, in the case of the industrial vehicles, which often, or even regularly, transport different loads in their running conditions, the use of the manual systems of the type known is extremely disadvantageous.

The main task of this invention is to solve, or at least reduce, the drawbacks described above that affect the systems for adjusting the orientation of the vehicle headlights known in the prior art.

In particular, in the scope of this task, the aim of this invention is to provide a system and a method for the automatic adjustment of the orientation of the vehicle headlights, as to relieve the driver of the task of the manual adjustment.

Also, the aim of this invention is to provide a system and a method for the automatic adjustment of the position of the vehicle headlights that are far more precise than the systems of the type known.

A further aim of this invention is to provide a system and a method for the automatic adjustment of the position of the vehicle headlights that allow a precise orientation of the light beam according to a continuous series of positions depending on the vehicle trim.

This task and these and other purposes that are explained below are achieved by a system for the automatic adjustment of the headlight orientation of a vehicle comprising adjustable headlights connected to appropriate means for the variation of the headlight orientation, and **characterized in that** it further comprises at least a vehicle inclination sensor able to detect the longitudinal trim of the vehicle, said inclination sensor, and said means for the variation of the headlight orientation being connected and controlled by an electronic control unit.

The present invention relates also to a method for the automatic adjustment of the headlight orientation of a vehicle by means of a system according to what described above and **characterized in that** it comprises the following steps:
- detect by means of said inclination sensor the longitudinal trim of the vehicle;
- process the data on the longitudinal trim of the vehicle by means of said electronic control unit;
- send a signal inducing the adjustment of the headlights according to the data on the longitudinal trim of the vehicle to said means for the variation of the headlight orientation.

Further characteristics and advantages of the present invention will become more clear from the following detailed description, that is merely illustrative and not limitative and is shown in the figures that are attached hereto, in which:

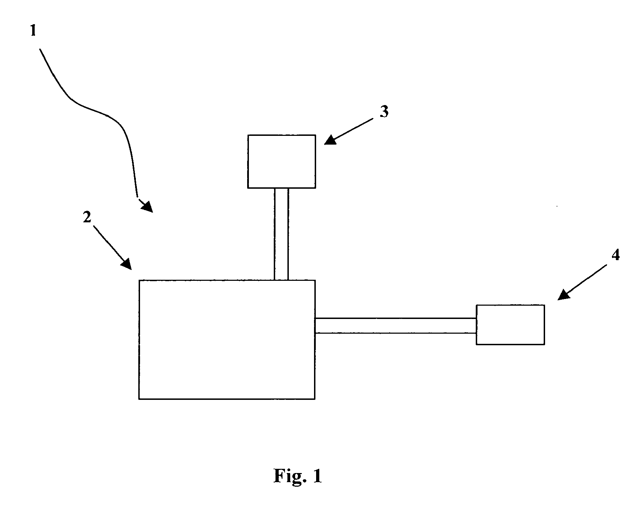

figure 1 shows a diagram of an embodiment of the automatic system for the adjustment of the headlight orientation according to this invention;

According to a preferred embodiment, this invention may appropriately comprise at least an electronic control unit 2, which may be a specially dedicated control unit but more advantageously will be a control unit already present on the vehicle and which carries out other control functions, means for the variation of the headlight orientation 3, and at least an inclination sensor 4.

Advantageously, the means for the variation of the headlight orientation 3 may comprise for example an electric motor associated to each of said headlights that regulates the orientation of the headlight itself, said electric motor being also connected to said electronic control unit 2 as to be able to receive the activation signal from it.

Moreover, said inclination sensor 4 may advantageously be constituted by a last generation sensor able to read the longitudinal inclination of the vehicle, that is its longitudinal trim, with a level of precision of up to 1024 signal points in a 90° arc, which means a precision of a tenth of a degree.

The system, that is the method, according to this invention functions as follows.

When the inclination sensor 4 detects a variation in the longitudinal trim of the vehicle that is caused, for example, by a load variation, the data is sent to the sensor 4 and to electronic control unit 2 which automatically sends the activation signal to the means 3 for the variation of the headlight orientation.

The control unit 2, therefore, is duly calibrated as to associate to each longitudinal trim value detected by the inclination sensor 4 the best headlight orientation value.

The control unit may automatically be calibrated as to know how to correct the headlight orientation when the longitudinal trim of the vehicle varies, so that the light beam always fulfils the law requirements.

Therefore it has been shown that the system and the method for the automatic adjustment of the headlight orientation of a vehicle according to the present invention achieves the purpose and the objects proposed.

In particular, it has been shown that the system and the method according to this invention allow to automatically adjust the headlight orientation of a vehicle, without any need for the driver's intervention.

It has also been shown that another aim achieved by the system and the method according to this invention is the possibility to adjust the headlight orientation in an extremely precise way and according to a series of predetermined position or in a continuous way, with an extremely high precision, up to the degree, in the automatic detection of the longitudinal trim of the vehicle.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. System (1) for the automatic adjustment of the headlight orientation of a vehicle comprising adjustable headlights connected to appropriate means (3) for the variation of the headlight orientation, **characterized in that** it further comprises at least a vehicle inclination sensor (4) able to detect the longitudinal trim of the vehicle, said inclination sensor (4), and said means (3) for the variation of the headlight orientation being controlled by an electronic control unit (2).

2. System (1) according to the previous claim**, characterized in that** said inclination sensor (4) is able to detect an inclination variation up to the fraction of degree.

3. System (1) according to one or more previous claim, **characterized in that** said inclination sensor (4) is able to detect up to 1024 detection point in a 90° arc.

4. System (1) according to any of the previous claims, **characterized in that** said means (3) for the variation of the headlight orientation comprise one or more electric motors for each headlight.

5. System (1) according to one or more previous claim, **characterized in that** said inclination sensor (4) is integrated in said electronic control unit (2).

6. Method for the automatic adjustment of the headlight orientation of a vehicle by means of an adjustment system (1) according to any of the previous claims, **characterized in that** it comprises the following steps:
- detect by means of said inclination sensor (4) the longitudinal trim of the vehicle;
- process the data on the longitudinal trim of the vehicle by means of said electronic control unit (2);
- send a signal inducing the adjustment of the headlights according to the data on the longitudinal trim of the vehicle to said means (3) for the variation of the headlight orientation.
